Europäisches Patentamt

European Patent Office

Office européen des brevets

(19)

(11) EP 0 988 226 B1

(12) EUROPÄISCHE PATENTSCHRIFT

(45) Veröffentlichungstag und Bekanntmachung des Hinweises auf die Patenterteilung:
09.10.2002 Patentblatt 2002/41

(21) Anmeldenummer: 98929416.0

(22) Anmeldetag: 03.06.1998

(51) Int Cl.$^7$: **B64C 13/28**, F16D 59/00, F16D 55/36, F16D 65/853, F16D 66/00

(86) Internationale Anmeldenummer:
PCT/EP98/03322

(87) Internationale Veröffentlichungsnummer:
WO 98/056655 (17.12.1998 Gazette 1998/50)

(54) **BREMSE FÜR EINEN AUFTRIEBSKLAPPENVERSTELLMECHANISMUS**

BRAKE FOR A LIFT FLAP ADJUSTMENT MECHANISM

FREIN POUR MECANISME DE DEPLACEMENT DE VOLETS DE SUSTENTATION

(84) Benannte Vertragsstaaten:
**DE FR GB**

(30) Priorität: **09.06.1997 DE 19724117**

(43) Veröffentlichungstag der Anmeldung:
**29.03.2000 Patentblatt 2000/13**

(73) Patentinhaber: **Liebherr-Aerospace Lindenberg GmbH**
**88161 Lindenberg/Allgäu (DE)**

(72) Erfinder:
• **FISCHER, Manfred**
  **D-88677 Markdorf (DE)**

• **HUNOLD, Bernard**
  **D-88046 Friedrichshafen (DE)**
• **ZIMMERMANN, Karl**
  **D-88048 Friedrichshafen (DE)**

(74) Vertreter: **Laufhütte, Dieter, Dr.-Ing. et al**
**Lorenz-Seidler-Gossel**
**Widenmayerstrasse 23**
**80538 München (DE)**

(56) Entgegenhaltungen:
WO-A-97/43557          US-A- 4 022 298
US-A- 4 480 733        US-A- 4 845 468
US-A- 4 909 363        US-A- 5 330 034

**Beschreibung**

Die vorliegende Erfindung betrifft eine Bremse für einen Auftriebsklappenverstellmechanismus, die ein feststehendes Gehäuse, eine antreibbare, unter Aufwendung eines Bremsmomentes drehbare Antriebswelle, sowie einen Sensor zur Ermittlung einer Temperatur in der Bremse aufweist, wobei eine Signalverarbeitungseinheit mit einer Auswertelogik für mindestens das Signal des Temperatursensors vorgesehen ist. Die vorliegende Erfindung betrifft ferner ein Verfahren zur Zustandsüberwachung der Bremse.

Derartige Bremsen werden in Verkehrsflugzeugen zur Erhöhung der passiven Sicherheit bei Defekten am Auftriebsklappenverstellmechanismus oder dessen Antrieb verwendet.

Beim Landeanflug wird der Auftrieb der Tragflügel durch ausfahrbare Auftriebsklappen (Flaps, Slats) wesentlich erhöht, wodurch geringere Fluggeschwindigkeiten ermöglicht werden. Diese Auftriebsklappen werden in der Regel symmetrisch auf der linken und rechten gegen die Wirkung von aerodynamischen Kräften ausgefahren. Für die beiden Tragflügelhälften ist dabei jeweils ein Antriebssystem vorgesehen.

Bei Störungen in einem der Antriebssysteme - beispielsweise durch Wellenbruch infolge einer Überlastung oder Materialermüdung - könnte der Fall eintreten, daß die bereits ausgefahrenen Auftriebsklappen einer Tragflächenhälfte von den aerodynamischen Kräften wieder in ihre eingefahrene Stellung bewegt werden. Der Auftrieb der beiden Tragflügelhälften wäre asymmetrisch, so daß eine sicherheitskritische Rollbewegung des Flugzeugs eingeleitet würde.

Um diesen Zustand zu vermeiden, sind moderne Verkehrsflugzeuge mit einem Sensor ausgerüstet, der eine Asymmetrie der beiden Flügelhälften erkennt und eine Ansteuerung von hydraulisch betätigten Bremsen auslöst. Die Bremsen verhindern dann eine weitere Bewegung der Auftriebsklappen durch aerodynamische Kräfte, so daß insgesamt nur eine geringe Asymmetrie entstehen kann und das Flugzeug sicher landen kann.

Bei diesem bekannten System ist die Überwachung der Asymmetrie und die hydraulische Ansteuerung sehr aufwendig und -bedingt durch die hohe Komplexität- störanfällig. Aus Sicherheitsgründen ist die hydraulische Ansteuerung redundant mit mindestens zwei getrennnten Hydrauliksystemen ausgeführt. Die Meß- und Steuersignale werden alle ständig in einem zentralen Steuerrechner überwacht. Die Vielzahl der vom Steuerrechner zu verarbeitenden Signale, welche auch in anderen Peripheriegeräten erzeugt werden, führt zu einer sehr hohen Komplexität des gesamten Steuerungssystems.

Es sind auch passiv wirkende Bremsen für diesen Einsatzzweck bekannt. Sie weisen ein Gehäuse und eine mit den Auftriebsklappen trieblich verbundene Antriebswelle auf, die in einer Drehrichtung frei drehbar im Gehäuse gelagert ist und sich in der anderen Drehrichtung nur bei Überwindung eines bestimmten Bremsmoments drehen läßt. Das Bremsmoment wird erzeugt von einem unter Federvorspannung stehenden Lamellenpaket. Im Drehmomentenfluß zwischen Gehäuse und Antriebswelle ist ein Freilauf angeordnet, wodurch die freie Drehbarkeit in einer Richtung erzielt wird.

Bei diesem Bremssystem wird der Umstand ausgenutzt, daß die aerodynamischen Kräfte an den Auftriebsklappen immer in Richtung "Einfahren" wirken. Die Bremse ist so eingebaut, daß die mit der Bremse trieblich verbundene Antriebswelle für die Auftriebsklappenverstellung beim Ausfahren der Auftriebsklappen frei drehbar ist. Beim Ausfahren müssen vom Antrieb der Auftriebsklappenverstellung also im wesentlichen nur die aerodynamischen Kräfte überwunden werden. Beim Einfahren der Auftriebsklappen, was in der Regel erst nach erfolgter Landung am Boden geschieht, muß der Antrieb im wesentlichen nur das Bremsmoment überwinden. Bei einem Defekt im Antrieb des Auftriebsklappenverstellmechanismus, verhindert die Bremse ein Einfahren der betreffenden Auftriebsklappe, so daß der sicherheitskritische asymmetrische Flugzustand vermieden wird. Das durch Federvorspannung auf das Lamellenpaket erzeugte Bremsmoment ist etwas größer als die maximalen Rückstellkräfte aus der aerodynamischen Belastung der Auftriebsklappe.

Vorteilhaft bei diesem System ist, daß der zentrale Steuerrechner von der ständigen Überwachung des Systems und der Ansteuerung der Hydraulikbremsen entlastet ist, und daß die Hydraulikbremsen mit ihrer aufwendigen Ansteuerung mittels mehrfach vorhandener Hydraulikleitungen entfallen.

Nachteilig bei diesem System ist, daß die Überprüfung der Funktionsfähigkeit im eingebauten Zustand kaum möglich ist. Insbesondere ist es schwierig Aussagen darüber zu treffen, ob das Bremsmoment im zulässigen Bereich liegt, oder ob die Bremse die vorgeschriebene Menge an Schmiermittel enthält. Wünschenswert ist jedoch, daß die Funktionsfähigkeit der Bremsen bei jedem Flugzyklus zuverlässig und auf einfache Weise überprüft werden kann.

Eine denkbare Möglichkeit, eine Aussage über die Höhe des Bremsmoments zu treffen, ist die Messung der Stromaufnahme des Antriebsmotors für die Auftriebsklappenverstellung. Das Ergebnis einer solchen Messung kann jedoch durch Reibung im Triebstrang zwischen dem Antriebsmotor und der Bremse erheblich verfälscht werden.

Eine Überwachung des Bremsmoments durch eine Messung des Reaktionsmoments an einer federnden Gehäuseaufhängung könnte die Dynamik des Systems unkontrollierbar beeinflussen.

Aus der U.S. 5,330,034 ist eine Scheibenbremse bekannt, die einen Temperatursensor aufweist, mittels dessen die Ist-Temperatur der Bremse erfaßt und mittels einer Auswerteeinheit in der Fahrzeugführerkabine angezeigt wird. Damit können unzulässig hohe Bremslasten und dadurch erzeugte, entsprechend hohe Temperaturen angezeigt werden und der Fahrzeugführer kann bei Erreichen einer kritischen Temperatur gewarnt werden. Der Funktionszustand der Bremse ist mittels einer derartigen Vorrichtung jedoch nicht ermittelbar. Entsprechend können Funktionsstörungen nicht erkannt werden.

Aufgabe der Erfindung ist eine zuverlässige passiv wirkende Bremse insbesondere für einen Auftriebsklappenverstellmechanismus zu schaffen, deren Funktionszustand im eingebauten Zustand einfach und mit hoher Aussagesicherheit überprüfbar ist. Außerdem soll ein Verfahren zur Zustandüberwachung der erfindungsgemäßen Bremse geschaffen werden.

Die Aufgabe wird durch eine Bremse mit den Merkmalen des Hauptanspruchs gelöst. Vorteilhafte Ausgestaltungen der Erfindung sind durch die abhängigen Ansprüche gegeben.

Gemäß der vorliegenden Erfindung kann anhand einer Abweichung des Signals des Temperatursensors von einer Solltemperatur eine Funktionsstörung der Bremse festgestellt werden.

Der oder die Temperatursensoren, die an geeigneter Stelle an der Bremse angeordnet sind, ermöglichen die Überwachung der Temperatur(en) an den Meßstellen.

Bei einem normalen Flugzyklus werden die Auftriebsklappen vor der Landung ganz ausgefahren und nach der Landung am Boden wieder ganz eingefahren. Der volle Verstellweg entspricht an der Antriebswelle des Auftriebsklappenverstellmechanismus, welche trieblich mit der Bremse gekoppelt ist, einer bestimmten Anzahl von Umdrehungen bzw. einem Gesamtdrehwinkel. Die Höhe des Sollbremsmoments, welches beim Einfahren der Auftriebsklappen überwunden werden muß, ist ebenfalls bekannt. Die Höhe der beim Einfahren der Auftriebsklappen erzeugten Reibarbeit ist gleich dem zeitlichen Integral der Reibleistung während des Vorgangs. Bei konstantem Bremsmoment errechnet sich die Reibarbeit aus dem Produkt von Bremsmoment und Gesamtdrehwinkel. Diese Reibarbeit führt zu einer charakteristischen Temperaturerhöhung in der Bremse, die durch den oder die Temperatursensoren ermittelt werden kann.

Liegt nun eine Störung in der Funktion der Bremse vor, so daß das Bremsmoment vom Sollbremsmoment abweicht, kann diese anhand der ermittelten Temperatur festgestellt werden. Ist das Bremsmoment zu klein, beispielsweise infolge eines Defekts von Federelementen oder Verschleiß an Reibbelägen, ist die Temperaturerhöhung kleiner als sonst. Wenn beispielsweise zu wenig Schmiermittel in der Bremse vorhanden ist, ist das Bremsmoment infolge einer Mangelschmierung an den Reibelementen größer und außerdem die Wärmekapazität der Bremse kleiner. In diesem Fall wird die Temperaturerhöhung größer sein.

Erfindungsgemäß ist eine Signalverarbeitungseinheit mit einer Auswertelogik für mindestens das Signal des Temperatursensors vorgesehen.

Die Auswertelogik führt den Vergleich der tatsächlichen Temperaturerhöhung während oder nach dem Einfahren der Auftriebsklappen mit einer vorgegeben, oder aus dem Signal des Drehsignalsensors ermittelten Solltemperaturerhöhung durch.

Ein Fehlersignal wird an den zentralen Steuerrechner nur dann übermittelt, wenn die Temperaturerhöhung außerhalb von erwarteten Grenzen liegt.

Um die Sicherheit weiter zu erhöhen oder auch Aussagen über die Temperaturverteilung in der Bremse zu erhalten ist es möglich, mehrere Temperatursensoren in der Bremse vorzusehen. Geeignete Stellen liegen beispielsweise im Schmiermittelbereich der Bremse, wo ein guter Temperaturausgleich gegeben ist, oder auch im Bereich von Reibelementen, wo die Einflüsse von Ableitung der Wärme an die Umgebung am geringsten sind.

Geeignete Temperatursensoren sind beispielsweise Halbleiter - Thermoelemente, die eine hohe Zuverlässigkeit aufweisen. Ebenso denkbar ist jedoch auch eine indirekte Temperaturermittlung durch Dehnungssensoren, die auf einem der Temperaturerhöhung ausgesetzten und sich dabei ausdehnenden Bauteil befestigt sind.

In einer vorteilhaften Ausgestaltung der Erfindung ist außerdem ein Drehsignalsensor vorgesehen, mit dem der Gesamtdrehwinkel gemessen werden kann. Durch diesen Sensor wird eine Überwachung der Bremse auch dann ermöglicht, wenn die Auftriebsklappen aus einer beliebigen Zwischenstellung heraus eingefahren werden. Die niedrigere Solltemperaturerhöhung ergibt sich aus dem entsprechend kleineren Gesamtdrehwinkel.

Der Drehsignalsensor kann beispielsweise als induktiver Drehzahlgeber ausgeführt sein. Durch eine geeignete Teilungsfolge an den Zähnen eines Geberrads ist es möglich, auch die Drehrichtung zu erkennen, was vorteilhaft für einen Auswertealgorithmus genutzt werden kann.

Die Signalverarbeitungseinheit kann dezentral in oder an der Bremse angeordnet sein, um einen zentralen Steuerrechner zu entlasten. Der zentrale Steuerrechner braucht die ansonsten zu ihm gleiteten Sensorsignale nicht ständig zu verarbeiten und wird dadurch entlastet.

Vorteilhaft ist, wenn in der Bremse in an sich bekannter Weise ein Freilauf trieblich zwischen Gehäuse und Antriebswelle angeordnet ist. Das Bremsmoment wird dann lediglich beim Einfahren der Auftriebsklappen wirksam. Beim Ausfahren der Auftriebsklappen müssen so lediglich die aerodynamischen Kräfte überwunden werden. Der Antrieb und die Struktur werden dabei weniger stark belastet als wenn auch beim Ausfahren das Bremsmoment überwunden werden müsste und können daher leichter ausgestaltet werden.

Zur Übertragung des Bremsmoments zwischen Gehäuse und Antriebswelle bietet ein ebenfalls grundsätzlich bekanntes unter Vorspannung stehendes Lamellenpaket Vorteile. Auf kleiner Bauraum läßt sich durch die Vielzahl der Reibflächen ein relativ hohes Drehoment übertragen, wobei eine weitgehend gleichmäßige Wärmeverteilung erzielt wird. Das Belegen jeweils einer von zwei Reibflächen mit einem speziellen Papierbelag ist eine erprobte und zuverlässige Methode um hohe, gut reproduzierbare Reibungskoeffizienten zu erzielen. Bei geeigneter Wahl der Reibbeläge und des Schmiermittels liegt das Verhältnis von Haftreibungskoeffizient und Gleitreibungskoeffizient in einem günstigen Verhältnis, so daß ein ruckartiges Losbrechen der Bremse vermieden wird.

Zum Aufbringen einer im wesentlichen konstanten Vorspannung eignet sich besonders gut ein elastisches Federelement, welches im Kraftfluß zwischen Gehäuse und mindestens einere äußeren Lamelle des Lamellenpakets angeordnet ist. Je nach konstruktiver Ausgestaltung kann es vorteilhaft sein zwischen Federelement und Gehäuse oder Federelement und äußerer Lamelle Zwischenglieder wie z.B. eine Druckplatte vorzusehen.

Eine sehr hohe Zuverlässigkeit wird dann erzielt, wenn mehrere parallel wirkende als Schraubenfedern ausgebildete Federelemente unter axialer Vorspannung im Kraftfluß zwischen Gehäuse und einer äußeren Lamelle des Lamellenpakets angeordnet sind. Vorteilhaft ist, wenn die Schraubenfedern gleichmäßig verteilt auf der ringscheibenförmigen Stirnfläche des Lamellenpakets angeordnet sind. Es wird dadurch eine gleichmäßige Anpressung erzielt, so daß schädliche Temperaturspitzen vermieden werden. Beim Ausfall einer Schraubenfeder ist das Bremsmoment nur um den Anteil kleiner, den diese eine Schraubenfeder an der gesamten Vorspannung hatte. Natürlich können jedoch auch andere Federelemente eingesetzt werden. Tellerfedern beispielsweise weisen den Vorteil auf, daß sie axial sehr kurz bauen.

Eine echte Redundanz wird erzielt, wenn beiderseits des Lamellenpakets gleichartige Federelemente angeordnet sind und die axiale Verschieblichkeit des Lamellenpakets auf beiden Seiten jeweils durch einen gehäusefesten Anschlag begrenzt' ist. Im normalen Betrieb wird das Lamellenpaket zwischen den Federelementen auf beiden Seiten gehalten. Bei Ausfall von Federelementen auf einer Seite ist die Federkraft auf dieser Seite geringer, so daß das Lamellenpaket zu dieer Seite hin ausweichen wird. Wenn jedoch ein gehäusefester Anschlag vorgesehen ist, der die axiale Verschieblichkeit begrenzt, ist das Lamellenpaket in diesem Fall zwischen dem Anschlag und den den noch intakten Federelementen der anderen gespannt. Vorausgesezt, daß das axiale Spiel zwischen Lamellenpaket und Anschlag nur gering ist, können sich die Federelemente nur um einen geringen Betrag dehnen, so daß praktisch die volle Vorspannkraft erhalten bleibt.

Die Verwendung von "Semifluid" als Schmiermittel ist vorteilhaft in Bezug auf Schmiermittelverteilung im Gehäuse und Korrosionsschutz.

Im folgenden wird die Erfindung anhand der beiliegenden Zeichnungen näher erläutert.

Fig. 1    zeigt einen Längsschnitt durch eine erfindungsgemäße Bremse.

Fig. 2    zeigt beispielhaft einen typischen Temperaturverlauf am Temperatursensor.

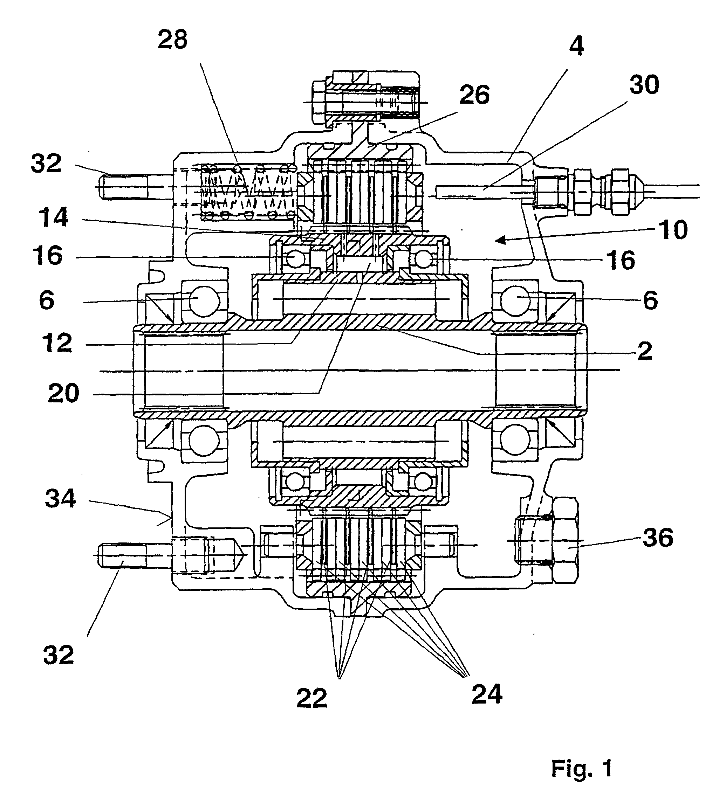

Bei der in Fig. 1 dargestellten erfindungsgemäßen Bremse ist die Antriebswelle 2 im Gehäuse 4 mittels der Kugellager 6 drehbar gelagert. Die Antriebswelle 2 ist als Hohlwelle ausgebildet. Sie weist an ihren äußeren Enden auf der Innenseite eine Formschlußverzahnung zur trieblichen Anbindung an die zu bremsende(n) Welle(n). Bei der Freilaufkupplung 10 ist der Innenring 12 drehfest mit der Antriebswelle 2 verbunden. Der Außenring 14 ist durch die Lager 16 in einer Drehrichtung drehbar auf dem Innenring 12 gelagert. Zwischen Innenring 12 und Außenring 14 sind Klemmkörper 20 angeordnet, die die Verdrehung des Außenrings gegenüber dem Innenring nur in einer Richtung zulassen. Auf dem Außenring 14 sind Reiblamellen 22 drehfest und axial verschieblich angeordnet. Diese Reiblamellen 22 sind vorzugsweise mit einem Papierbelag versehen, wodurch ein hoher Reibwert und ein günstiges Verhältnis von Haft- und Gleitreibung erzielt wird. Jede dieser Reiblamellen 22 ist zwischen jeweils zwei Reiblamellen 24, welche vorzugsweise als Stahlamellen ausgeführt sind, angeordnet. Diese sind wiederum drehfest und mit axialem Spiel im Lamellenträger 26 angeordnet. Der Lamellenträger ist fest mit dem Gehäuse 4 verbunden. Die am Umfang verteilten Schraubenfedern 28, von denen in der Schnittzeichnung nur eine einzige dargestellt ist, sind in dafür vorgesehenen Aufnahmen im Gehäuse gehalten. Die axiale Vorspannung der Federn 28 wirkt auf das Lamellenpaket 22, 24 und bestimmt die Höhe des übertragbaren Bremsmoments.

In einer Ausführungsform, bei der nur auf einer Seite des Lamellenpakets Federelemente angeordnet sind, stützt sich die gegenüberliegende äußere der Lamellen 24 axial auf einen Anschlag im Lamellenträger 26.

Im Gehäuse 4 ist beiderseits des Lamellenpakets ein axialer Bauraum für die Aufnahme von Federelementen vorgesehen, so daß auch eine redundante Federanordnung auf beiden Seiten des Lamellenpakets ermöglicht ist. Bei dieser Ausführungsform ist das Axialspiel der äußeren der Lamellen 24 im Lamellenträger 26 nach außen jeweils begrenzt. Solange von den Federelementen auf beiden Seiten des Lamellenpakets die gleiche Axialkraft erzeugt wird, wird das Lamellenpaket axial zwischen diesen Federelementen gehalten. Fällt nun beispielsweise ein Federelement auf der rechten Seite des Lamellenpakets aus, wird sich die rechte äußere der Lamellen 24 an den dafür vorgesehenen Anschlag im Lamellenträger 26 anlegen. Die Federelemente auf der linken Seite des Lamellenpakets verlängern sich dabei nur geringfügig, so daß praktisch nach wie vor die volle Vorspannung im Lamellenpaket erhalten bleibt. Das volle Bremsmoment bleibt übertragbar.

In der dargestellten Ausführungsform ist ein einziger Temperatursensor 30, welcher ins Innere des Gehäuses 4 hineinragt, dargestellt. Die daran angeschlossene Meßleitung führt zu der nicht dargestellten Signalverarbeitungseinheit. Zur Erhöhung der Sicherheit ist es vorteilhaft, mehrere Temperatursensoren vorzusehen.

Das Temperatursignal wird im zentralen Steuerrechner, oder bei einer vorteilhaften Ausgestaltung der Erfindung in einer dezentralen Signalverarbeitungseinheit, die nahe der Bremse angeordnet ist, verarbeitet. Die Signalverarbeitungseinheit kann ein dezentraler Rechner mit einem Mikroprozessor sein oder beispielsweise auch eine einfache elektronische Logikschaltung.

Die Bolzen 32 und die ebene Fläche 34 dienen zur Befestigung der Bremse an der Flugzeugstruktur. Durch die abgedichtete Verschlußschraube 36 ist das Innere der Bremse beispielsweise für die Befüllung mit Schmiermittel zugänglich. Als Schmiermittel eignet sich "Semifluid" aufgrund der guten Schmier- und Korrosionschutzeigenschaften besonders gut.

Der Temperatursensor 30 im Gehäuse der passiv wirkenden Bremse ermöglicht eine einfache und zuverlässige Überprüfung des Funktionszustandes der Bremse.

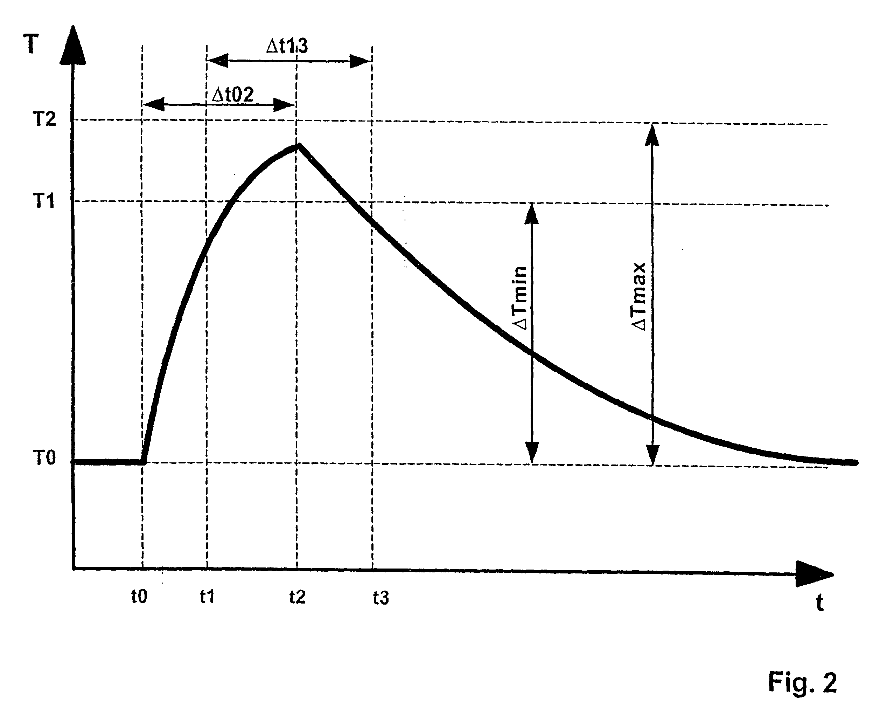

Fig. 2 zeigt schematisch einen Temperaturverlauf über der Zeit aufgetragen, wie während und nach einer Verdrehung der Antriebswelle im Gehäuse unter Aufwendung des Bremsmoments in der Bremse gemessen werden kann. Es ist angenommen, daß der Temperatursensor räumlich sehr nahe am Lamellenpaket angeordnet ist, so daß keine wesentlichen Verzögerungszeiten auftreten. In der Zeichnung sind Temperaturen mit T und Zeiten mit t bezeichnet.

Im Zeitintervall $\Delta t02$ findet der Verstellvorgang statt, der beispielsweise 20 Sekunden dauern kann. Bei Beginn des Verstellvorgangs herrscht die Temperatur T0. Während des Verstellvorgangs, wird an den Reibflächen im Lamellenpaket Wärme erzeugt, so daß die Temperatur ansteigt. Am Ende des Verstellvorgangs (oder kurz danach) zum Zeitpunkt t2, wird die maximale Temperatur an der Meßstelle erreicht. Nach dem Zeitpunkt t2 nimmt die Temperatur wieder langsam ab; die Wärme wird dabei an die Umgebung abgegeben.

In der Signalverarbeitungseinheit sind als Solltemperaturen eine untere Grenze $\Delta Tmin$ und eine obere Grenze $\Delta Tmax$ für die Temperaturerhöhung abgelegt. Diese können entweder fest vorgegeben sein, oder aus dem Signal eines Drehsensors und dem bekannten Sollbremsmoment ermittelt werden. Der Betrag der Temperaturerhöhung kann beispielsweise 50 Kelvin sein. Ausgehend von der Anfangstemperatur T0 ergeben sich die untere Temperaturgrenze T1 und obere Temperaturgrenze T2 zu

$$T1 = T0 + \Delta Tmin$$

$$T2 = T0 + \Delta Tmax,$$

wobei $\Delta Tmin$ beispielsweise 40 Kelvin und $\Delta Tmax$ 60 Kelvin betragen können.

Im Meßintervall $\Delta t13$ wird die gemessene Temperatur mit dem Temperaturen T1 und T2 verglichen. Wenn nun die Temperatur T1 während des Meßintervalls nicht erreicht wird (z.B. bei defekten Federelementen), oder wenn die Temperatur T2 überschritten wird (z.B. bei Mangelschmierung), liegt ein Fehler in der Bremse vor. Die Signalverarbeitungseinheit erzeugt ein Fehlersignal, welches an den zentralen Steuerrechner übertragen wird. Andernfalls wird kein Signal erzeugt; der zentrale Steuerrechner wird nicht mit der Verarbeitung eines Signals belastet.

Dieses Verfahren zur Zustandsüberwachung ist einfach und bietet bereits eine hohe Aussagesicherheit über den Zustand der Bremse.

Natürlich sind auch verfeinerte Auswertealgorithmen möglich. Mehr Informationen über den Zustand der Bremse lassen sich beispielsweise dadurch gewinnen, daß verschiedene Meßpunkte berücksichtigt werden. Durch den Vergleich der Signale von verschiedenen Temperatursensoren läßt sich beispielsweise auch ein defekter Sensor erkennen, was durch ein Fehlersignal gegebenenfalls an den zentralen Steuerrechner gemeldet werden kann.

Wird gar der zeitliche Temperaturverlauf (Aufheiz- und Abkühlphase) mit einem Solltemperaturverlauf verglichen, lassen sich weitere Aussagen über den Zustand der Bremse treffen.

Bezugszeichen

2   Antriebswelle
4   Gehäuse
6   Lager
10   Freilaufkupplung
12   Innenring
14   Außenring
16   Lager
20   Klemmkörper
22   Reiblamellen
24   Reiblamellen
26   Lamellenträger
28   Schraubenfeder
30   Temperatursensor
32   Bolzen
34   Fläche
36   Verschlußschraube

## Patentansprüche

1. Bremse für einen Auftriebsklappenverstellmechanismus, die ein feststehendes Gehäuse (4), eine antreibbare, unter Aufwendung eines Bremsmomentes drehbare Antriebswelle (2), sowie einen Sensor (30) zur Ermittlung einer Temperatur in der Bremse aufweist, wobei eine Signalverarbeitungseinheit mit einer Auswertelogik für mindestens das Signal des Temperatursensors (30) vorgesehen ist, **dadurch gekennzeichnet, daß** anhand einer Abweichung des Signals des Temperatursensors von einer Solltemperatur eine Funktionsstörung der Bremse festgestellt werden kann.

2. Bremse nach Anspruch 1, **dadurch gekennzeichnet, daß** an der Antriebswelle (2) ein Drehsignalsensor vorgesehen ist.

3. Bremse nach Anspruch 1 oder 2, **dadurch gekennzeichnet, daß** die Signalverarbeitungseinheit dezentral in oder an der Bremse angeordnet ist, um einen zentralen Steuerrechner zu entlasten.

4. Bremse nach einem der Ansprüche 1 bis 3, **dadurch gekennzeichnet, daß** ein Freilauf (10) trieblich zwischen Gehäuse (4) und Antriebswelle (2) angeordnet ist, so daß das Bremsmoment nur bezüglich einer Drehrichtung übertragbar ist.

5. Bremse nach einem der Ansprüche 1 bis 4, **dadurch gekennzeichnet, daß** ein unter axialer Vorspannung stehendes Lamellenpaket mit mehreren im wesentlichen kreisringscheibenförmigen teilweise papierbelegten Reiblamellen (22, 24) zur Übertragung des Bremsmoments zwischen Gehäuse (4) und Antriebswelle (2) vorgesehen ist, wobei axial aufeinanderfolgend abwechselnd jeweils eine Lamelle mit dem Gehäuse (4) und eine Lamelle mit der Antriebswelle (2) drehfest und axial verschieblich verbunden ist.

6. Bremse nach Anspruch 5, **dadurch gekennzeichnet, daß** mindestens ein Federelement (28) im Kraftfluß zwischen Gehäuse (4) und mindestens einer äußeren Lamelle des Lamellenpakets zum Aufbringen einer im wesentlichen konstanten axialen Vorspannung im Lamellenpaket vorgesehen ist.

7. Bremse nach Anspruch 6, **dadurch gekennzeichnet, daß** mehrere parallel wirkende, als Schraubenfedern ausgebildete Federelemente (28) unter axialer Vorspannung im Kraftfluß zwischen Gehäuse und einer äußeren Lamelle des Lamellenpakets angeordnet sind.

8. Bremse nach Anspruch 7, **dadurch gekennzeichnet, daß** beiderseits des Lamellenpakets jeweils mindestens ein Federelement (28) und ein, die axiale Verschieblichkeit der äußeren Lamellen des Lamellenpakets begrenzender gehäusefester Anschlag vorgesehen ist.

9. Bremse nach einem der Ansprüche 1 bis 8, **dadurch gekennzeichnet, daß** das Gehäuse (4) mit "Semifluid" als Schmiermittel befüllt ist.

10. Verfahren zur Zustandsüberwachung einer Bremse nach einem der Ansprüche 1 bis 9 **dadurch gekennzeichnet, daß** in einem Zeitraum (Δt13) während oder nach einer Verdrehung der Antriebswelle (2) im Gehäuse (4) unter Aufwendung eines Bremsmomentes das Temperatursignal in einer Signalverarbeitungseinheit mit einer Solltemperatur (T1, T2) verglichen wird, und bei Abweichungen ein Fehlersignal erzeugt wird.

11. Verfahren nach Anspruch 10, **dadurch gekennzeichnet, daß** die Solltemperatur (T1, T2) aus dem Signal des Drehsensors und dem vorgebbaren Sollbremsmoment ermittelt wird.

## Claims

1. Brake for a flap adjusting mechanism, which has a fixed housing (4), a drivable drive shaft (2) rotatable with the expenditure of a braking torque, and a sensor (30) for determining a temperature in the brake, a signal-processing unit with evaluation logic for at least the signal from the temperature sensor (30) being provided, **characterized in that** a malfunction of the brake can be detected with reference to a deviation of the signal of the temperature sensor from a desired temperature.

2. Brake according to Claim 1, **characterized in that** a rotation signal sensor is provided on the drive shaft (2).

3. Brake according to Claim 1 or 2, **characterized in that** the signal-processing unit is disposed remotely in or on the brake in order to relieve a central control computer.

4. Brake according to one of Claims 1 to 3, **characterized in that** a freewheel (10) is disposed between the housing (4) and the drive shaft (2) in terms of drive, so that the braking torque can only be transmitted with respect to one direction of rotation.

5. Brake according to one of Claims 1 to 4, **characterized in that** an axially preloaded disc assembly with a plurality of, in some cases, paper-lined friction discs (22, 24) shaped essentially like annular discs is provided for transmitting the braking torque between the housing (4) and the drive shaft (2), the discs being connected alternately in axial succession with the housing (4) and the drive shaft (2) in such a way as to be axially displaceable and fixed against relative rotation.

6. Brake according to Claim 5, **characterized in that** at least one spring element (28) is provided in the power flow between the housing (4) and at least one outer disc of the disc assembly for the purpose of applying an essentially constant axial preload in the disc assembly.

7. Brake according to Claim 6, **characterized in that** a plurality of spring elements (28) acting in parallel and formed as coil springs are disposed with an axial preload in the power flow between the housing and an outer disc of the disc assembly.

8. Brake according to Claim 7, **characterized in that** at least one spring element (28) and one stop, which is fixed relative to the housing and limits the axial slidability of the outer discs of the disc assembly, are provided on each side of the disc assembly.

9. Brake according to one of Claims 1 to 8, **characterized in that** the housing (4) is filled with "semifluid" as a lubricant.

10. Method for condition monitoring of a brake according to one of Claims 1 to 9, **characterized in that** the temperature signal is compared with a desired temperature (T1, T2) in a signal-processing unit in a time period ($\Delta$t13) during or after a rotation of the drive shaft (2) in the housing (4) with the expenditure of a braking torque, and a fault signal is produced in the case of deviations.

11. Method according to Claim 10, **characterized in that** the desired temperature (T1, T2) is determined from the signal of the rotation sensor and the specifiable desired braking torque.

## Revendications

1. Frein pour un mécanisme de déplacement de volets de sustentation, qui présente un boîtier fixe (4), un arbre d'entraînement (2) pouvant être entraîné, pouvant tourner lors de l'application d'un couple de freinage, ainsi qu'un capteur (30) pour déterminer une température dans le frein, où est prévue une unité de traitement de signaux avec une logique d'évaluation pour au moins le signal du capteur de température (30), **caractérisé en ce qu'**à l'aide d'un écart du signal du capteur de température d'une température de consigne, un fonctionnement défaillant du frein peut être constaté.

2. Frein selon la revendication 1, **caractérisé en ce qu'**un détecteur de signaux de rotation est prévu à l'arbre d'entraînement (2).

3. Frein selon la revendication 1 ou 2, **caractérisé en ce que** l'unité de traitement des signaux est disposée d'une manière décentralisée dans ou au frein pour décharger un calculateur de commande central.

4. Frein selon l'une des revendications 1 à 3, **caractérisé en ce qu'**une roue libre (10) est disposée de façon menante entre le boîtier (4) et l'arbre d'entraînement (2) de telle sorte que le couple de freinage peut être transmis seulement relativement à une direction de rotation.

5. Frein selon l'une des revendications 1 à 4, **caractérisé en ce qu'**un paquet de lamelles sous précontrainte axiale avec plusieurs lamelles de friction (22, 24) sensiblement en forme de disque circulaire, partiellement recouvertes de papier, est prévu pour la transmission du couple de freinage entre le boîtier (4) et l'arbre d'entraînement (2), où axialement à la suite, en alternance, respectivement une lamelle est reliée d'une manière non tournante et déplaçable axialement au boîtier (4) et une lamelle à l'arbre d'entraînement (2).

6. Frein selon la revendication 5, **caractérisé en ce qu'**au moins un élément du ressort (28) est prévu dans le flux de force entre le boîtier (4) et au moins une lamelle extérieure du paquet de lamelles pour appliquer une précontrainte axiale sensiblement constante au paquet de lamelles.

7. Frein selon la revendication 6, **caractérisé en ce que** plusieurs éléments de ressort (28) agissant parallèlement, réalisés sous forme de ressorts hélicoïdaux, sont disposés sous précontrainte axiale dans le flux des forces entre le boîtier et une lamelle extérieure du paquet de lamelles.

8. Frein selon la revendication 7, **caractérisé en ce qu'**il est prévu de part et d'autre du paquet de lamelles respectivement au moins un élément de ressort (28) et une butée solidaire du boîtier, délimitant le déplacement axial de la lamelle extérieure du paquet de lamelles.

9. Frein selon l'une des revendications 1 à 8, **caractérisé en ce que** le boîtier (4) est rempli de "semifluide" comme lubrifiant.

10. Procédé de surveillance de l'état d'un frein selon l'une des revendications 1 à 9, **caractérisé en ce que** dans un laps de temps ($\Delta$t13) pendant ou après un tour de l'arbre d'entraînement (2) dans le boîtier (4), en appliquant un couple de freinage, le signal de température dans une unité de traitement de signaux est comparé à une température de consigne (T1, T2) et, en cas d'écart, un signal d'erreur est produit.

11. Procédé selon la revendication 10, **caractérisé en ce que** la température de consigne (T1, T2) est déterminée à partir du signal du détecteur de rotation et du couple de freinage de consigne prédéfinissable.

EP 0 988 226 B1

**Fig. 1**

Fig. 2

EP 0 988 226 B1